**Europäisches Patentamt**

**European Patent Office**

**Office européen des brevets**

(19)

(11) Veröffentlichungsnummer : **0 395 874 B1**

(12) # EUROPÄISCHE PATENTSCHRIFT

(45) Veröffentlichungstag der Patentschrift :
**19.11.92 Patentblatt 92/47**

(51) Int. Cl.$^5$ : **B60R 11/00**

(21) Anmeldenummer : **90105630.9**

(22) Anmeldetag : **24.03.90**

(54) **Geräteträger für Fahrzeuge.**

(30) Priorität : **29.04.89 DE 3914314**

(43) Veröffentlichungstag der Anmeldung :
**07.11.90 Patentblatt 90/45**

(45) Bekanntmachung des Hinweises auf die
Patenterteilung :
**19.11.92 Patentblatt 92/47**

(84) Benannte Vertragsstaaten :
**DE FR GB**

(56) Entgegenhaltungen :
**AU-B- 579 841**
**DE-A- 3 717 986**
**US-A- 3 799 362**
**US-A- 4 268 209**
**US-A- 4 771 926**
**AVIATION WEEK AND SPACE TECHNOLOGY.**
**vol. 105, no. 18, 01 November 1976, NEW YORK**
**US Seite 43 "Missile Engineering ; Swingfireu-**
**ses special rack in test launch"**

(73) Patentinhaber : **MaK System Gesellschaft**
**mbH**
**Falckensteiner Strasse 2**
**W-2300 Kiel 17 (DE)**

(72) Erfinder : **Iser, Klaus, Dipl.-Ing.**
**Kuhlacker 43**
**W-2300 Kiel 14 (DE)**
Erfinder : **Thiesen, Theodor, Dipl.-Ing.**
**Rotenbek 72**
**W-2300 Kiel 1 (DE)**
Erfinder : **Lange, Ulrich**
**Pinguinweg 16**
**W-2300 Kiel 17 (DE)**

(74) Vertreter : **Hansmann, Dierk, Dipl.-Ing.**
**Patentanwälte Hansmann-Klickow-Hansmann**
**Jessenstrasse 4**
**W-2000 Hamburg 50 (DE)**

EP 0 395 874 B1

**Beschreibung**

Die Erfindung betrifft einen Geräteträger eines militärischen Kettenfahrzeuges zur Aufnahme von Ausrüstungs- und Arbeitsgeräten sowie Ersatzteilen an den Außenflächen, wobei ein Traggerüst in der horizontalen Ebene außerhalb der Fahrzeugkontur an einer abfallenden Außenfläche des Fahrzeuges um eine horizontale Schwenkachse am Heckteil gehaltert ist.

Bei militärischen Kettenfahrzeugen besteht das Problem, den geringen geschützten Innenraum von Ausrüstungs- und Arbeitsgeräten sowie Ersatzteilen freizuhalten. Da aber Panzerfahrzeuge im Heckbereich Montage- und Wartungsöffnungen, u.a. den Triebwerksraum, aufweisen, muß eine gute Zugänglichkeit mit geringem Aufwand gewährleistet sein und auch in der Transportlage Luftein- und Luftaustrittsöffnungen nicht beeinträchtigt werden.

Es ist zwar zur Verwendung bei Personenkraftwagen bekannt, Gepäckbrücken verschwenkbar in der gattungsgemäßen Art zu haltern, wie es gemäß der DE-A-35 20 132 vorgeschlagen wurde. In diesem Fall soll ein Dachträger geschaffen werden, der bedarfsweise leicht montierbar ist.

Aufgabe der Erfindung ist es, für einen stationären Geräteträger eine zusätzliche Wartungs- und Inspektionsstellung zu schaffen, die einfach einstellbar ist und einen schnellen Zugang gewährleistet sowie auch eine Rückstellung in die Ausgangsstellung als Transportlage ermöglicht und dabei auch die entsprechenden Luftein- und Luftaustrittsöffnungen freigibt.

Die Lösung dieser Aufgabe erfolgt erfindungsgemäß dadurch, daß das Traggerüst L-förmig ausgebildet ist, wobei der kürzere Schenkel am freien Ende die Schwenkachse aufnimmt.

Dabei wird der Abstand des Gerüstes zur Fahrzeugfläche so gewählt, daß die Funktion der unter diesem Gerüst befindlichen Luftein- und -austrittsöffnungen nicht beeinträchtigt wird. In der ausgeschwenkten Position gibt der Geräteträger dann die Zugangsöffnungen für Wartungsarbeiten frei. Zusätzlich sind Höhe und Horizontallage des Geräteträgers anpaßbar.

Es ist dabei vorgesehen, daß das Traggerüst zur Schwenkbewegung durch Elemente, wie Federn, Hydraulikaggregate, unterstützbar ist.

Weiterhin wird vorgeschlagen, daß das Traggerüst zusätzliche Abschlußeinrichtungen für Munition trägt.

Im folgenden soll die Erfindung anhand von in der Zeichnung dargestellten Ausführungsbeispielen näher erläutert werden. Es zeigen:

Fig. 1 eine Draufsicht auf einen klappbaren Geräteträger, der sich oberhalb der Triebwerksraumabdeckung eines Kettenfahrzeuges befindet,

Fig. 2 den gleichen Geräteträger in der Seitenansicht,

Fig. 3 einen klappbaren Geräteträger gemäß Fig. 1 und 2 in modifizierter Form.

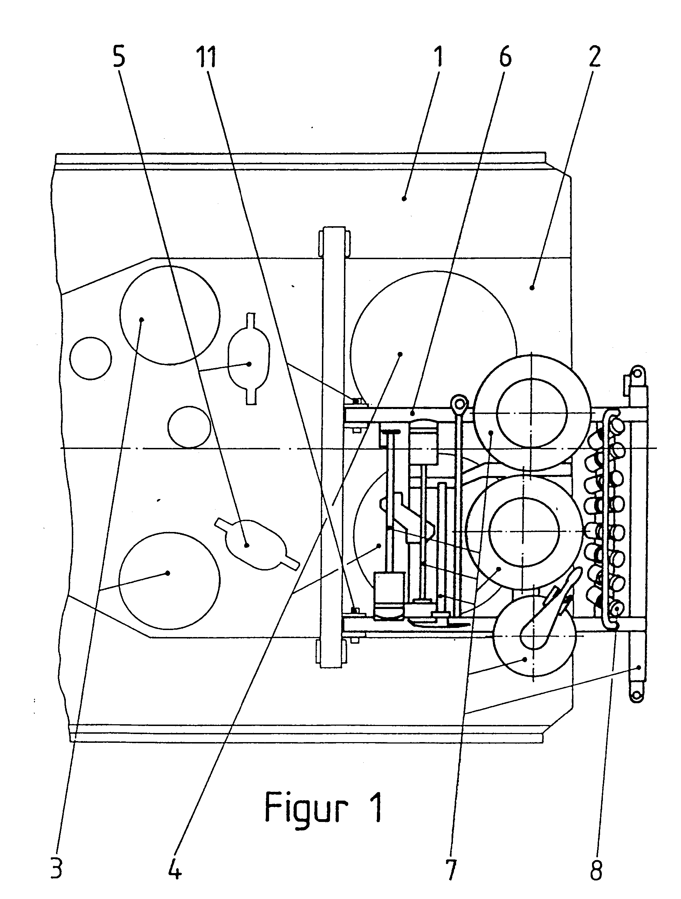

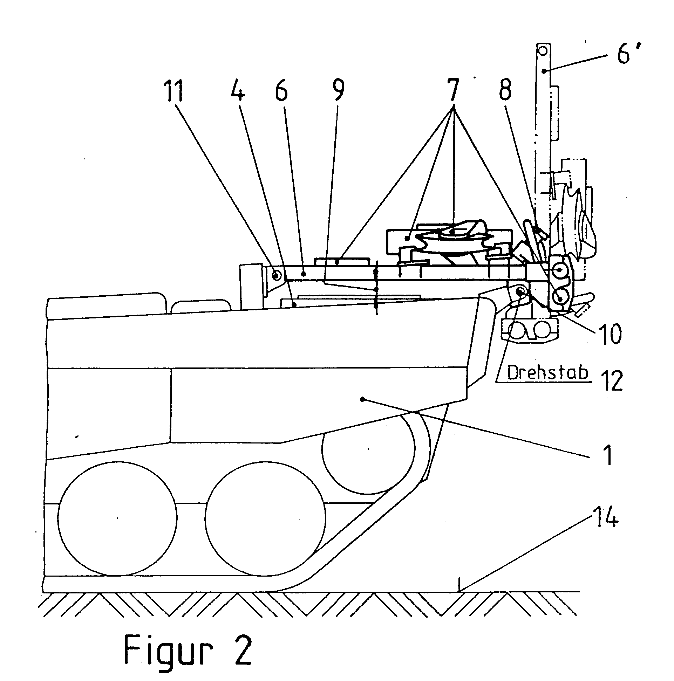

Die Darstellung gemäß Fig. 1 zeigt ein Fahrzeug 1 mit einer Triebwerksraumabdeckung 2, welche Lufteintrittsöffnungen 3, Luftaustrittsöffnungen 4 und zusätzliche Wartungsöffnungen 5 enthält. Über den Luftaustrittsöffnungen 4 befindet sich ein Geräteträger 6, welcher als Traggerüst ausgebildet ist und eine Reihe von Ausrüstungs- und Ersatzteilen 7 aufnimmt. Außerdem trägt er Nebenwurfbecher 8, die durch Verschwenken des Geräteträgers 6 in die geeignete Abschußposition gebracht werden können. Der Abstand 9 zwischen dem Geräteträger 6 und den Luftaustrittsöffnungen 4 ist unter Berücksichtigung der freien Durchtrittsflächen zwischen den Teilen 7 so gewählt, daß der Luftaustritt nicht beeinträchtigt wird. Der Geräteträger 6 ist um eine angenähert horizontale Achse 10 schwenkbar gehaltert und in der in Fig. 2 ausgezogen dargestellten Fahrstellung mit Hilfe zweier Bolzen 11 auf der Fahrzeugoberseite fest arretierbar.

Um die Triebwerksraumabdeckung 2 abzunehmen, werden zunächst die beiden Bolzen 11 gezogen. Anschließend wird der Geräteträger 6 in die Position 6' geklappt. Damit ist der Zugang zur Triebwerksraumabdeckung ohne Demontage der Teile 7 gewährleistet. Der Klappvorgang wird durch einen Drehstab 12, welcher in die Schwenkachse 10 integriert ist, unterstützt.

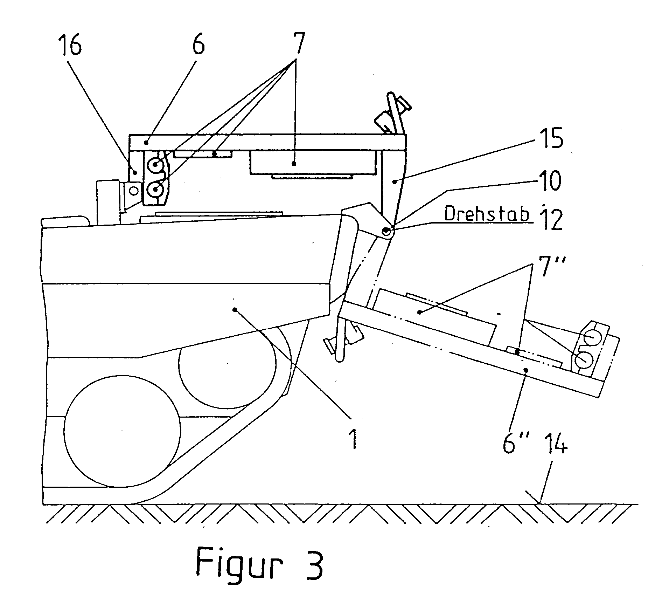

Fig. 3 zeigt eine Variante der Ausführung gemäß den Fig. 1 und 2. Hier ist der Geräteträger 6 über Stützelemente 15,16 hochgesetzt, so daß die Teile 7 in der Transportstellung auf der Trägerseite Platz finden. Gleichzeitig ist die Klappachse 10 am Heck des Fahrzeuges 1 tiefer gesetzt. Beide Maßnahmen bewirken, daß der Geräteträger 6 in der abgeklappten Position 6" soweit abgesenkt wird, daß die Teile 7 bzw. 7" in normaler Arbeitshöhe zum Erdboden 14 zugänglich sind.

**Patentansprüche**

1. Geräteträger eines militärischen Kettenfahrzeuges zur Aufnahme von Ausrüstungs- und Arbeitsgeräten sowie Ersatzteilen an den Außenflächen, wobei ein Traggerüst in der horizontalen Ebene außerhalb der Fahrzeugkontur an einer abfallenden Außenfläche des Fahrzeuges um eine horizontale Schwenkachse am Heckteil gehalten ist, dadurch gekennzeichnet, daß das Traggerüst (6) L-förmig ausgebildet ist, wobei der kürzere Schenkel am freien Ende die Schwenkachse (10) aufnimmt.

2. Geräteträger nach Anspruch 1, dadurch gekennzeichnet, daß das Traggerüst (6) zur Schwenkbewegung durch Elemente, wie Federn (12), Hydraulikaggregate, unterstützbar ist.

3. Geräteträger nach Anspruch 1 oder 2, dadurch gekennzeichnet, daß das Traggerüst (6) zusätzliche Abschußeinrichtungen (8) für Munition trägt.

## Claims

1. Tool carrier of a military track-laying vehicle for receiving equipment and implements and spare parts on the outer faces, a supporting frame being mounted in the horizontal plane on the tail part, outside the vehicle contour on a downward-sloping outer face of the vehicle and so as to pivot about a horizontal axis, characterised in that the supporting frame (6) is L-shaped, and the shorter arm thereof receives the pivot shaft (10) at the free end.

2. Tool carrier according to claim 1, characterised in that the supporting frame (6) is supportable for pivoting by elements such as springs (12) and hydraulic units.

3. Tool carrier according to claim 1 or 2, characterised in that the supporting frame (6) carries additional devices (8) for firing ammunition.

## Revendications

1. Support d'appareils pour un véhicule militaire à chenilles, support destiné à porter, aux faces externes, des appareils d'équipement et de travail, ainsi que des pièces de rechange, un châssis portant étant maintenu en plan horizontal à l'extérieur du profil du véhicule, sur une face externe descendante du véhicule, avec possibilité de pivotement sur un axe de pivotement horizontal prévu à la partie arrière, le support d'appareils étant caractérisé en ce que le châssis portant (6) est prévu en forme de L, l'aile la plus courte présentant, à l'extrémité libre, l'axe de pivotement (10).

2. Support d'appareils suivant la revendication 1, caractérisé en ce que le châssis portant(6) est soutenu, pour le mouvement de pivotement, par des éléments tels que ressorts et groupes hydrauliques.

3. Support d'appareils suivant l'une où l'autre des revendications 1 et 2, caractérisé en ce que le châssis portant(6) porte des dispositifs complémentaires de lancement (8) pour munitions.

Figur 1

11  4  6  9  7  8  6'

Drehstab  12

10

1

14

Figur 2

Figur 3